(19) Europäisches Patentamt
European Patent Office
Office européen des brevets

(11) **EP 3 178 330 B1**

(12) **EUROPÄISCHE PATENTSCHRIFT**

(45) Veröffentlichungstag und Bekanntmachung des Hinweises auf die Patenterteilung:
**27.11.2019 Patentblatt 2019/48**

(21) Anmeldenummer: **16195353.4**

(22) Anmeldetag: **24.10.2016**

(51) Int Cl.:
*A23F 5/04* (2006.01)          *A23F 5/16* (2006.01)
*A23N 12/08* (2006.01)

(54) **VERFAHREN UND VORRICHTUNG ZUM RÖSTEN VON KAFFEEBOHNEN**

METHOD AND DEVICE FOR ROASTING COFFEE BEANS

PROCÉDÉ ET DISPOSITIF DE TORRÉFACTION DE GRAINS DE CAFÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.12.2015 DE 102015121674**

(43) Veröffentlichungstag der Anmeldung:
**14.06.2017 Patentblatt 2017/24**

(73) Patentinhaber: **Neuhaus Neotec Maschinen- und Anlagenbau GmbH**
**27777 Ganderkesee (DE)**

(72) Erfinder:
• **LÜHRS, Gustav**
**Fockestrasse 67**
**27777 Ganderkesee (DE)**
• **TORENZ, Ralf**
**Fockestrasse 67**
**27777 Ganderkesee (DE)**

(74) Vertreter: **Hauck Patentanwaltspartnerschaft mbB**
**Postfach 11 31 53**
**20431 Hamburg (DE)**

(56) Entgegenhaltungen:
WO-A1-2015/158678    DE-A1- 4 314 874
US-A1- 2014 314 923

• **DENIS ANDRZEJEWSKI ET AL: "Analysis of Coffee for the Presence of Acrylamide by LC-MS/MS", JOURNAL OF AGRICULTURAL AND FOOD CHEMISTRY, Bd. 52, Nr. 7, 2004, Seiten 1996-2002, XP55087857, ISSN: 0021-8561, DOI: 10.1021/jf0349634**
• **ANESE MONICA ET AL: "Effect of vacuum roasting on acrylamide formation and reduction in coffee beans", FOOD CHEMISTRY, Bd. 145, 2014, Seiten 168-172, XP028741836, ISSN: 0308-8146, DOI: 10.1016/J.FOODCHEM.2013.08.047**

**Beschreibung**

Die Erfindung betrifft ein Verfahren und eine Vorrichtung zum Rösten von Kaffeebohnen.

Das Rösten von Kaffeebohnen erfolgt mit Hilfe von erhitzter Luft (Röstgas) bei Temperaturen von bis zu etwa 400°C. Die Rösttemperatur hat entweder einen konstanten vorgegebenen Wert oder einen bestimmten zeitlichen Verlauf (Röstprofil). Der Wärmeübergang im Röster erfolgt durch Wärmeübertragung von der Röstkammer bzw. durch Konvektion vom erhitzten Röstgas auf die Kaffeebohnen. Für eine gleichmäßige Röstung werden die Kaffeebohnen während der Röstung bewegt, vorzugsweise ohne mechanische Rührwerke. Der Röstvorgang wird durch schnelles Abkühlen der Kaffeebohnen mittels Kühlluft oder durch Eindüsen von Wasser beendet, vorzugsweise in einer separaten Kühlkammer. Zum Rösten werden insbesondere Heißluftröster, vorzugsweise RFB-Röster (*rotational flexible bed* = rotierendes, bewegliches Bohnenbett), Fließbettröster, Trommelröster oder Schaufelradröster verwendet. Röster gibt es sowohl als industrielle Röster insbesondere für Großröstereien als auch als Kleinröster insbesondere für Ladengeschäfte.

Bei einem herkömmlichen Röstvorgang ist der Temperaturanstieg zu Beginn der Röstung verhältnismäßig steil, schwächt sich später allmählich ab und steigt am Ende der Röstung unter Einfluss einer exothermen Reaktion steil an. Die Temperatur der Kaffeebohnen kann am Ende der Röstung nicht ohne weiteres konstant oder annähernd konstant gehalten werden.

Die Steuerung der Rösttemperatur gemäß einem Röstprofil ist insbesondere bei Industrieröstern wegen der großen wärmespeichernden Massen problematisch. Industrieröster werden zur besseren Ausnutzung der dem Röstgas zugeführten Wärmeenergie im Umluftbetrieb betrieben.

Bekannt ist, die Röstparameter auf Provenienz und Qualität der Kaffeebohnen abzustimmen. Insbesondere die Rösttemperatur, der Verlauf der Rösttemperatur über der Zeit, die Röstzeit und die eingesetzte Luftmenge beeinflussen das Röstergebnis. Bei RFB-Röstkammern ist die Variabilität der Röstparameter besonders groß.

Die US 5,681,607 beschreibt ein Verfahren zum Verbessern der Qualität von gerösteten Kaffeebohnen umfassend das Rösten grüner Kaffeebohnen mit Dampf über eine Zeit von 50 bis 300 Sekunden bei einer Dampftemperatur von 251° bis 400°C bei einem Druck von 6,5 bis 20,0 Bar und danach Endrösten der Kaffeebohnen mit Dampf über eine Zeit von 60 bis 800 Sekunden bei einer Dampftemperatur von 251° bis 400°C bei im Wesentlichen Umgebungsdruck. Die Röstung wird in einem Trommelröster durchgeführt. Die Röstung soll das Aroma des Kaffees verbessern. Nachteilig ist der anlagentechnische Aufwand für die Röstung mittels Wasserdampf in einer ersten Phase bei erhöhtem Druck und in einer zweiten Phase bei Normaldruck.

Die US 2014/0314923 A1 beschreibt einen Fließbett-Kaffeeröster, bei dem das Zeit-/Temperatur-Röstprofil gesteuert wird, indem eine Steuerungseinrichtung ein Gebläse und eine Heizeinrichtung steuert.

Die DE 43 14 874 A1 beschreibt ein Verfahren und eine Vorrichtung zum Rösten von Röstgut, wobei der Temperaturverlauf beim Rösten durch Regeln der Temperatur einer Heizquelle für das Röstgut gesteuert wird.

Davon ausgehend liegt der Erfindung die Aufgabe zugrunde, ein Verfahren und eine Vorrichtung zum Rösten von Kaffeebohnen zu schaffen, mit dem/der vielfältigere Röstprofile durchgeführt werden können. Insbesondere sollen Röstprofile mit besonders steilem Temperaturanstieg am Anfang der Röstung und mit besonders schwachem oder gar keinem Temperaturanstieg am Ende der Röstung ermöglicht werden.

Die Aufgabe wird durch ein Verfahren mit den Merkmalen von Anspruch 1 gelöst. Vorteilhafte Ausgestaltungen des Verfahrens sind in Unteransprüchen angegeben.

Bei dem erfindungsgemäßen Verfahren zum Rösten von Kaffeebohnen durch Beaufschlagen der Kaffeebohnen mit Röstgas wird die Temperatur der Kaffeebohnen während der Röstung durch zumindest zeitweiliges Beaufschlagen der Kaffeebohnen mit Röstgas in Kombination mit Kühlgas gesteuert.

Durch die Beaufschlagung mit Röstgas in Kombination mit Kühlgas kann die Temperatur der Kaffeebohnen auch während einer insgesamt verhältnismäßig kurzen Röstzeit besonders effektiv gesteuert werden. Insbesondere kann hierdurch einem übermäßigen Anstieg der Temperatur der Kaffeebohnen in der exothermen Röstphase wirksam entgegengewirkt werden.

Die Temperatur der Kaffeebohnen wird entsprechend einem bestimmten Röstprofil gesteuert. Das Röstprofil kann vielfältige Verläufe haben. Es kann insbesondere ganz oder teilweise die Form einer gekrümmten Kurve, insbesondere mit verschiedenen Krümmungsrichtungen und Krümmungsradien, ganz oder teilweise die Form einer Geraden aufweisen, nahezu sprunghaft ansteigen oder abfallen, konstante Werte oder beliebige Kombinationen der genannten Charakteristika aufweisen.

Durch die verbesserte Steuerbarkeit der Röstprofile werden bessere Qualitäten der Röstung ermöglicht.

Gemäß einer weiteren Ausführungsart beträgt der mittlere Anstieg der Temperatur der Kaffeebohnen zumindest während einer ersten Röstphase 15°C bis 40°C pro Minute, vorzugsweise 20°C bis 36°C pro Minute. Die Erfindung ermöglicht besonders steile Anstiege der Temperatur der Kaffeebohnen. Die erste Röstphase ist vorzugsweise eine Röstphase zu Beginn der Röstung. Gegebenenfalls kann die erste Röstphase eine Aufheizphase von kurzer Dauer (z.B. 1 Minute Dauer) umfassen, in der die Kaffeebohnen aufgeheizt werden. Die Erfindung ermöglicht auch Röstprofile, bei denen die Temperatur während einer Röstphase abfällt.

Gemäß einer weiteren Ausführungsart beträgt der mittlere Anstieg der Temperaturen der Kaffeebohnen zumindest in einer zweiten Röstphase 0 bis 7°C pro Minute, vorzugsweise 1 bis 6,3°C pro Minute, weiterhin vorzugsweise 2 bis 5°C pro Minute. Die Erfindung ermöglicht besonders flache Temperaturanstiege. Die zweite Röstphase findet bevorzugt am Ende der Röstung statt. Es ist aber auch möglich, dass die zweite Röstphase der ersten Röstphase vorangeht oder diese unterbricht.

Gemäß einer weiteren Ausführungsart der Erfindung wird die Röstung der Kaffeebohnen in einer Heißluft-, vorzugsweise RFB-, oder Fluidbett-Röstkammer durchgeführt. Bei diesem Röstertyp ist im Vergleich zu anderen Röstertypen der Anteil des Wärmeübergangs durch Konvektion von Röstgas zu den Kaffeebohnen besonders hoch, die Durchmischung der Kaffeebohnen in der Röstkammer besonders gleichmäßig und die Wärmekapazität der Röstkammer besonders gering. Dies begünstigt eine genaue Steuerung der Temperatur der Kaffeebohnen mittels Heißgas und Kühlgas in einer verhältnismäßig kurzen Röstzeit.

Das erfindungsgemäße Verfahren eignet sich besonders für Industrieröster.

Gemäß einer bevorzugten Ausführungsart wird eine Menge von mindestens 150 kg Kaffeebohnen pro Stunde, vorzugsweise von mindestens 300 kg Kaffeebohnen pro Stunde, geröstet. Bei diesen Mindestmengen Kaffeebohnen ist der Einsatz von Industrieröstern erforderlich.

Gemäß einer weiteren Ausgestaltung werden die Kaffeebohnen mit Umluft (= im Kreis geführtes Röstgas) geröstet. Bei der Röstung mit Umluft wird das Röstgas durch die Röstkammer, danach gegebenenfalls durch einen Zyklon, danach durch einen Brenner und danach mittels eines Heißluftgebläses zurück in die Röstkammer gefördert. Die Röstung mit Umluft findet in Industrieröstern statt, um Wärmeenergie einzusparen.

Gemäß einer weiteren Ausführungsart beträgt die Röstzeit der Kaffeebohnen 1,5 bis 15 Minuten, vorzugsweise 5 bis 9,5 Minuten. Aufgrund der besonders variablen Steuerung der Temperatur der Kaffeebohnen ermöglicht die Erfindung besonders kurze Röstzeiten.

Ferner wird die Aufgabe durch eine Vorrichtung mit den Merkmalen von Anspruch 9 gelöst. Vorteilhafte Ausgestaltungen der Vorrichtung sind in Unteransprüchen angegeben.

Gemäß Anspruch 9 weist die Vorrichtung Mittel zur Durchführung des Verfahrens nach einem der Ansprüche 1 bis 8 auf, umfassend eine Röstkammer, eine Einrichtung zum Erhitzen von Röstgas, eine Einrichtung zum Einspeisen des Röstgases in die Röstkammer, eine Einrichtung zum Bereitstellen von Kühlgas, die einen Lufteinlass für Umgebungsluft aufweist, eine Einrichtung zum Einspeisen des Kühlgases in die Röstkammer und eine elektrische Steuerung auf, wobei die elektrische Steuerung so ausgebildet ist, dass sie die Einrichtung zum Erhitzen von Röstgas, die Einrichtung zum Einspeisen des Röstgases, die Einrichtung zum Bereitstellen von Kühlgas und die Einrichtung zum Einspeisen des Kühlgases so steuert, dass durch Einspeisen von Röstgas und zumindest zeitweiliges Einspeisen von Kühlgas in Kombination mit Röstgas in die Röstkammer während der Röstung die Temperatur der Kaffeebohnen gesteuert wird.

Der erfindungsgemäßen Vorrichtung kommen die Vorteile des erfindungsgemäßen Verfahrens zu. Die nachfolgenden Ausgestaltungen der erfindungsgemäßen Vorrichtung weisen die Vorteile der entsprechenden Ausgestaltung des erfindungsgemäßen Verfahrens auf.

Vorzugsweise ist die elektrische Steuerung so ausgebildet, dass sie die Temperatur der Kaffeebohnen gemäß einem Röstprofil steuert. Gemäß einer bevorzugten Ausführungsart hat das Profil ganz oder teilweise in Form einer gekrümmten Kurve oder Geraden oder einer Kombination von Kurve und Geraden. Der erfindungsgemäßen Vorrichtung kommen die vorteilhaften Wirkungen des erfindungsgemäßen Verfahrens zu. Dies gilt auch für die nachfolgenden Ausführungsarten der Vorrichtung.

Gemäß einer weiteren Ausführungsart ist die Röstkammer eine Heißluft-, vorzugsweise RFB-, oder eine Fluidbett-Röstkammer.

Gemäß einer weiteren Ausführungsart wird das Röstgas als Umluft durch die Röstkammer geführt.

Gemäß einer weiteren Ausführungsart wird das Röstgas in einem Kreislauf durch die Röstkammer, vom Röstgas-Auslass der Röstkammer vorzugsweise durch einen Zyklon, durch einen Brenner, durch ein Heißluftgebläse und zum Röstgas-Einlass der Röstkammer geführt.

Gemäß einer weiteren Ausführungsart hat die Vorrichtung eine Röstkapazität (= Durchsatz an Kaffeebohnen in einer bestimmten Zeitspanne) von 150 kg Kaffeebohnen pro Stunde, vorzugsweise von mindestens 300 kg Kaffeebohnen pro Stunde. Vorrichtungen zum Rösten mit diesen Röstkapazitäten sind Industrieröster.

Gemäß einer weiteren Ausführungsart umfasst die Vorrichtung einen Temperatursensor, der so in der Röstkammer angeordnet ist, dass er beim Rösten Kontakt mit den Kaffeebohnen aufweist, um die Temperatur der Kaffeebohnen zu erfassen.

Gemäß einer weiteren Ausführungsart ist ein elektrisch gesteuertes Kühlgasventil in den Einrichtungen zum Bereitstellen und Einspeisen von Kühlgas mit der elektrischen Steuerung verbunden, wobei die elektrische Steuerung ausgebildet ist, das Kühlgasventil während der Röstung von Kaffeebohnen zu steuern, um durch Einspeisen von Kühlgas die Temperatur der Kaffeebohnen beim Rösten zu steuern.

Gemäß einer weiteren Ausführungsart sind die Einrichtung zum Erhitzen von Röstgas und die Einrichtung zum Bereitstellen von Kühlgas mit einer gemeinsamen Einrichtung zum Einspeisen von Röstgas und Kühlgas in die Röstkammer verbunden. Das Heißgas ist vorzugsweise Heißluft. Vorzugsweise handelt es sich dabei um in Kreislauf durch die Röstkammer geführte Heißluft (Umluft).

Das Kühlgas ist Luft bei Umgebungstemperatur.

Die Erfindung wird nachfolgend anhand der anliegenden Zeichnungen eines Ausführungsbeispiels näher erläutert. In den Zeichnungen zeigen:

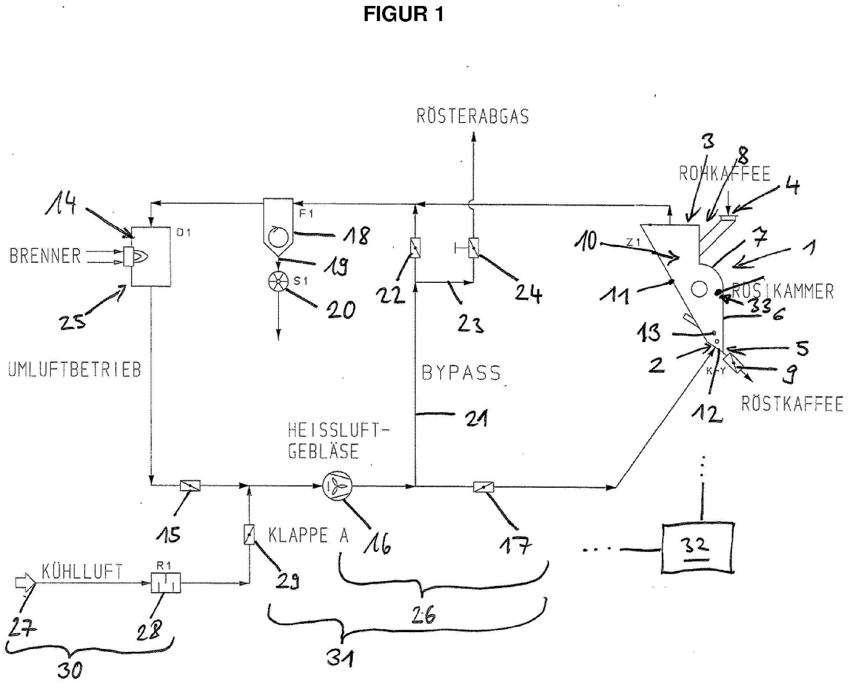

Fig. 1 ein grobschematisches Anlagenschema einer erfindungsgemäßen Vorrichtung zum Rösten von Kaffeebohnen gemäß dem erfindungsgemäßen Verfahren;

Fig. 2 ein Röstprofil einer mit der Vorrichtung durchgeführten Röstung;

Fig. 3 bis 6 Röstprofile von Vergleichsuntersuchungen, die mit einer erfindungsgemäßen Vorrichtung zum Rösten und einer herkömmlichen Vorrichtung zum Rösten ermittelt wurden.

Die Vorrichtung hat eine Röstkammer 1, die als Heißluft-, vorzugsweise RFB-Röstkammer, ausgebildet ist.

Die Röstkammer 1 umfasst unten einen Röstgas-Einlass 2, oben einen Röstgas-Auslass 3 und einen Kaffeebohnen-Einlass 4 und unten einen Kaffeebohnen-Auslass 5.

Die Röstkammer 1 hat eine vertikal emporragende, erste Stirnwand 6, von deren oberen Ende ein Umlenkabschnitt 7 einer Deckwand 8 ausgeht, der zum Inneren der Röstkammer 1 hin konkav gekrümmt ist. Am unteren Ende der ersten Stirnwand 6 befindet sich der Kaffeebohnen-Auslass 5, der eine Auslassklappe 9 umfasst. An den Umlenkabschnitt 7 grenzt im Bereich der Deckwand 8 ein schachtartig nach oben ragender Kammerabschnitt 10 an, der sich oben zum Röstgas-Auslass 3 öffnet.

Der Kammerabschnitt 10 weist den Kaffeebohnen-Einlass 4 auf.

Eine zweite Stirnwand 11 erstreckt sich vom äußeren Rand des Röstgas-Auslasses 3 unterhalb desselben bis unter den Umlenkabschnitt 7 der Deckwand 8. Vom unteren Ende der zweiten Stirnwand 11 erstreckt sich bis zum unteren Ende der ersten Stirnwand 6 der Röstgas-Einlass 2, der vorzugsweise durch ein Lochblech 12 gebildet ist. Im Beispiel ist der Röstgas-Einlass 2 zur Horizontalen geneigt. Er kann aber auch horizontal ausgerichtet sein.

Für das Rösten von Kaffeebohnen wird die Röstkammer 1 durch den Kaffeebohnen-Einlass 4 teilweise mit Kaffeebohnen 13 befüllt, z.B. zu einem Viertel ihres Gesamtvolumens. Durch Einblasen von Röstgas in den Röstgas-Einlass 2 werden die Kaffeebohnen 13 angehoben, am Umlenkabschnitt 7 im Gegenuhrzeigersinn (in der Zeichnung) abgelenkt und rutschen die zweite Stirnwand 11 nach unten herab, um später erneut angehoben zu werden. Durch diese Fluidisierung der Kaffeebohnen 13 wird ein intensiver konvektiver Wärmeübergang erreicht, der gleichmäßig auf sämtliche Kaffeebohnen 13 einwirkt.

Durch den Kaffeebohnen-Auslass 5 gelangen die gerösteten Kaffeebohnen 13 in eine Kühleinrichtung, die vorzugsweise wie die Röstkammer ausgebildet und mit Kühlgas beschickt wird.

Röstgas wird im Kreislauf durch einen Brenner 14, ein erstes Ventil 15, ein Heißluftgebläse 16, ein zweites Ventil 17, durch den Röstgas-Einlass 2 in die Röstkammer 1 und aus dieser heraus durch den Röstgas-Auslass 3 zu einem Einlass eines Zyklons 18 und von seinem Gasauslass zum Brenner 14 zurückgefördert. Der Zyklon 18 hat einen Feststoffaustrag 19 mit einer Zellenradschleuse 20, die abgetrennte Feststoffe (z.B. Schalen oder Kaffeebohnen geringer Dichte) in einen Sammelbehälter austragen kann.

Zwischen dem Heißluftgebläse 16 und dem zweiten Ventil 17 ist eine Nebenschlussleitung 21 über ein drittes Ventil 22 mit dem Einlass des Zyklons 18 verbunden.

Die Nebenschlussleitung 21 (Bypass) dient dazu, das Röstgas beim Entleeren der Röstkammer 1 an der Röstkammer 1 vorbeizuleiten und den Röstgaskreislauf zu erhalten, um eine Aufheizzeit zwischen aufeinanderfolgenden Röstungen von zwei Chargen zu vermeiden.

In der Nebenschlussleitung 21 zweigt vor dem dritten Ventil 22 eine Abgasleitung 23 mit einem vierten Ventil 24 ab. Durch die Abgasleitung 23 kann Röstgas - vorzugsweise nach einer Röstgasreinigung - an die Umgebung abgegeben werden.

Der Brenner 14 ist eine Einrichtung zum Erhitzen von Röstgas 25. Das Heißluftgebläse 16 sowie das zweite Ventil 17 sind Einrichtungen zum Einspeisen von Röstgas 26 in die Röstkammer 1.

Umgebungsluft wird als Kühlgas durch einen Lufteinlass 27 über einen Filter 28 und ein Kühlgasventil 29 der Verbindung zwischen dem ersten Ventil 15 und dem Heißluftgebläse 16 bereitgestellt. Der Lufteinlass 27 und der Filter 28 sind eine Einrichtung zum Bereitstellen von Kühlgas 30 und das Kühlgasventil 29 in Verbindung mit dem Heißluftgebläse 16 und dem zweiten Ventil 17 Einrichtungen zum Einspeisen von Kühlgas 31 in die Röstkammer 1.

Die Ventile 15, 17, 22, 24, 29 sind vorzugsweise als Klappenventile ausgebildet. Sämtliche Ventile sind elektrisch steuerbar.

Ferner umfasst die Vorrichtung eine elektrische Steuerung 32, die mit dem Brenner 14, dem Heißluftgebläse 16, den Ventilen 15, 17, 22, 24, 29, dem Kaffeebohnen-Auslass 5 und der Zellenradschleuse 20 verbunden ist.

Ferner umfasst die Vorrichtung einen mit der Steuerung 32 verbundenen Temperatursensor 33, der in der Röstkammer 1 angeordnet ist und die Temperatur der Kaffeebohnen 13 beim Rösten erfasst.

In der elektrischen Steuerung 32 ist ein Röstprofil 34 hinterlegt, das einen vorgegebenen Verlauf der Temperatur der Kaffeebohnen über der Zeit umfasst.

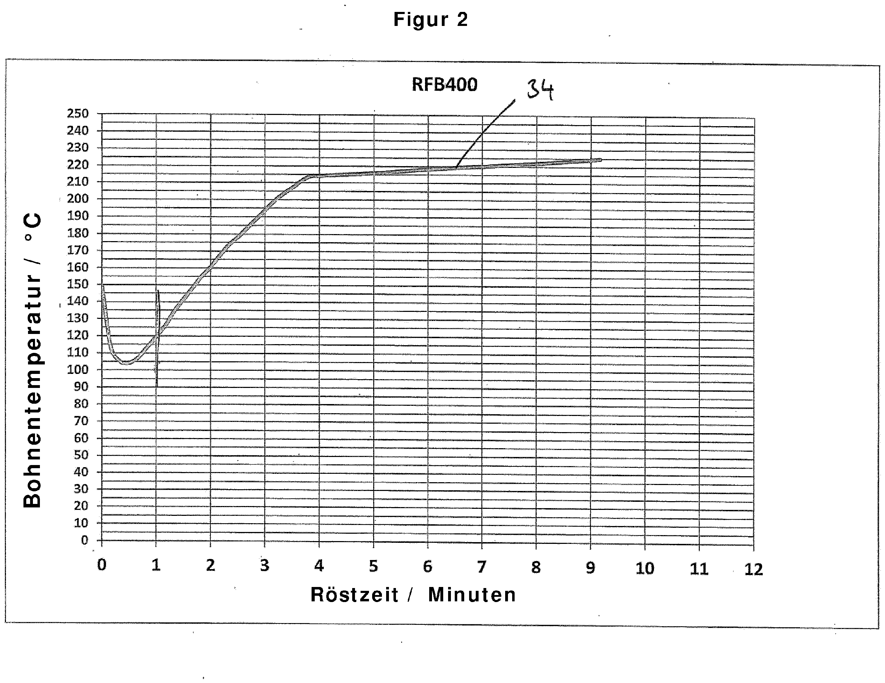

Das Röstprofil 34 ist vorzugsweise so ausgebildet, wie in Fig. 2 gezeigt.

Gemäß Figur 2 passt sich zu Beginn der ersten Röstphase während einer Zeitspanne von ca. einer Minute die Temperatur des Temperatursensors 33 an die Temperatur der zum Zeitpunkt 0 eingefüllten Kaffeebohnen 13 an. Im nachfolgenden Teil der ersten Röstphase steigt die mittlere Temperatur der Kaffeebohnen 13 mit 35°C pro Minute an, bis am Ende der ersten Röstphase bei etwa 3,75 Minuten Röstdauer eine Temperatur der Kaffeebohnen von 215°C erreicht wird. In der direkt nachfolgenden zweiten Röstphase steigt die Temperatur der Kaffeebohnen nur noch mit 2°C pro Minute an, um am Ende der zweiten Röstphase bei neun Minuten Röstzeit 225°C zu erreichen.

Die elektrische Steuerung 32 steuert den Brenner 14 sowie das Heißluftgebläse 16 und die Ventile 15, 17, 22, 24, 29 der Einrichtungen zum Erzeugen und Einspeisen von Röstgas 25, 26 sowie der Einrichtungen zum Erzeugen und Einspeisen von Kühlgas 30, 31 zu jedem Zeitpunkt so, dass die Mengenströme und die Temperaturen des Röstgases und des Kühlgases die Kaffeebohnen 13 auf die gemäß dem Röstprofil 34 vorgesehene Temperatur bringen. Dabei wird die Einhaltung der vorgesehenen Temperatur der Kaffeebohnen 13 mittels des Temperatursensors 33 überprüft.

Nachfolgend sind die Ergebnisse von (Vergleichs-)Untersuchungen zusammengefasst. Vorab sind die Messmethoden für die Messung der Färbung und des Acrylamidgehaltes der gerösteten Kaffeebohnen angegeben.

- Verfahren zum Messen des CTn-Werts in gerösteten Kaffeebohnen:
   Der Röstgrad der gerösteten Kaffeebohnen wurde durch Farbmessung mit dem Neuhaus Neotec ColorTest II® (Neuhaus Neotec™) bestimmt. Der Röstgrad von Kaffeebohnen ist umgekehrt proportional zu den CTn-Werten. Es wurde eine Probe von 100g gerösteten Kaffeebohnen von dem Röster gesammelt und auf Raumtemperatur abkühlen gelassen. Die Probe wurde unter Verwendung einer Ditting-Mühle auf eine durchschnittliche Teilchengröße zwischen 800 und 1000 $\mu$m gemahlen. Der frisch gemahlene Kaffee wurde durch Mischen homogenisiert und 40g wurden in einen Probenmessbecher geleert und die Fläche wurde vorsichtig glatt gestrichen. Der Messbecher wurde dann in der Ablage des ColourTest II®-Instruments platziert und der CTn-Wert wurde gemessen. Die Ergebnisse der CTn-Werte wurden als der Durchschnitt von Duplikaten der nächsthöheren CTn-Einheit ausgedrückt. Je niedriger der CTn-Wert, desto dunkler ist der Kaffee.

- Verfahren zum Messen des Acrylamidgehalts in gerösteten Kaffeebohnen:
   100g geröstete Kaffeebohnen wurden unter Verwendung einer Retsch®-Trommel-mühle und unter Verwendung eines 0,5-mm-Siebs gemahlen. 40$\mu$g/ml mit der Bezeichnung "isopotomer Acrylamide solution (internal standard)" (isopotomere Acrylamid-Lösung (interner Standard)) wurden 2 Gramm der gemahlenen Probe beigemengt, die in 20 ml Wasser extrahiert wurden. Auf das Extrahieren folgt die Entfernung von nicht polaren Interferenzprodukten durch Beimengung von 5 ml 2,2,4-Trimethylpentan unter Bewegung während 60 Minuten bei Raumtemperatur. 3 ml wässriger Extrakt wurden nach dem Zentrifugieren (20 Minuten, bei 10°C bei 4500 U/min) gesammelt und mit 3 ml Wasser verdünnt. Die wässrige Fraktion, die Acrylamid enthält, wurde überdies durch Festphasenextraktion auf einer Multimode®-Patrone (Biotage™), gefolgt von einer Extraktion auf einer ENV+®-Patrone (Biotage™), gereinigt. Das in dem Extrakt enthaltene Acrylamid wurde danach konzentriert und durch LC-MS/MS analysiert. 5 $\mu$l der Probe wurden bei einer Strömungsgeschwindigkeit von 0,6 ml/min auf die LC-Säule Shodex RSpak DE-413 (Shodex™) geladen, in mobile Phase A: 0,01 % Ameisensäure in Wasser und mobile Phase B: 100 % Methanol LC-MS grade. Die Verbindungen durchquerten danach MS/MS Applied Biosystems Sciex 5500qQq (AB Sciex™). Die Acrylamid-Ermittlung wurde unter Verwendung der Software Analyst® (AB Sciex™) basierend auf der für Acrylamid spezifischen Retentionszeit durchgeführt. Die Berechnung der Acrylamid-Konzentration in der unbekannten Probe wurde unter Verwendung der folgenden Formel erhalten:

$$C_{SAA} = C_{Sd3-AA} * ((A_{AA}/A_{d3-AA})-I)/S)$$

wobei

$C_{SAA}$ = Acrylamid-Konzentration in der unbekannten Probe

$C_{Sd3-AA}$ = Konzentration von $d_3$-AA (interner Standard) in der entstandenen Probe in g/kg

I = Achsenabschnitt der Kalibrierungskurve

S = Steigung der Kalibrierungskurve

$A_{AA}$ = Fläche von Acrylamid auf dem Chromatogramm

$A_{d3-AA}$ = Fläche von Acrylamid auf dem Chromatogramm

Ergebnisse von Acrylamid werden ohne Dezimalen in $\mu$g/kg ausgedrückt, und 1 ppm = 1000 $\mu$g/kg.

Die Messunsicherheit des Verfahrens wurde auf zwischen 13 % und 15 % geschätzt.

Beispiel 1

Dieses Beispiel veranschaulicht das Rösttemperaturprofil, das durch das Verfahren der vorliegenden Erfindung erhalten wird, im Vergleich zum Temperaturprofil, das in einem Trommelröster erhalten wird. Es veranschaulicht auch, dass der Gehalt der unerwünschten Verbindung, d. h. Acrylamid, wenn das Verfahren der vorliegenden Erfindung angewandt wird, um Kaffeebohnen zu rösten, im Vergleich zum Rösten in einem Trommelröster erheblich niedriger ist.

Das Verfahren gemäß der vorliegenden Erfindung wurde angewandt, um Kaffeebohnen in der gleichen Röstkammer zu rösten. Im Schritt a) wurde eine Charge von 35kg einer Mischung aus Robusta- und Arabica-Kaffeebohnen mit einem Neotec™-RFB-Röster (rotational flexible bed = rotierendes, bewegliches Bohnenbett) in Kontakt gebracht und mit einer Strömung heißer Verbrennungsgase aufgewirbelt, was eine Aufheizgeschwindigkeit von 20,7°C/Minute für eine Dauer von 5 Minuten ergibt. Im Schritt b) wurde Luft mit Umgebungstemperatur in die Verbrennungsgasströmung eingeführt, was eine Aufheizgeschwindigkeit von 6,1°C/Minute für eine Dauer von 4,1 Minuten ergab.

Die unter Verwendung des Verfahrens gemäß der vorliegenden Erfindung erzielte Röstfarbe, die gemäß dem vorhergehend beschriebenen Verfahren unter Verwendung des Neuhaus Neotec ColorTest II® Spektrophotometers gemessen wurde, ergab einen CTn-Wert von 74.

Der Acrylamidgehalt in der durch das Verfahren gemäß der vorliegenden Erfindung gerösteten Probe, der gemäß dem vorhergehend beschriebenen Verfahren gemessen wurde, betrug 298 ppm.

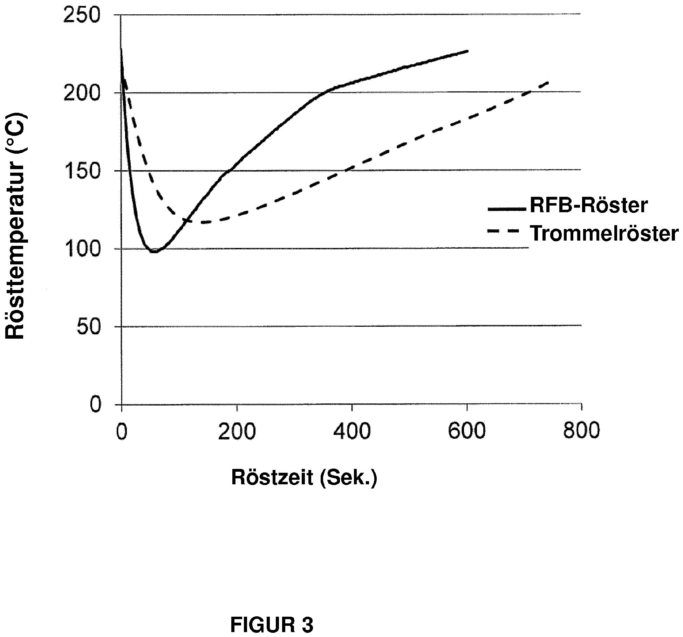

Das Rösttemperaturprofil gemäß der vorliegenden Erfindung ist in Figur 3 veranschaulicht (RFB - normale Kurve).

Zu Vergleichszwecken wurde ein aus einem Schritt bestehendes Röstverfahren in einem Trommelröster eingesetzt. Eine Charge von 410 kg einer Mischung aus Robusta- und Arabica-Kaffeebohnen (gleiche Spezifikationen wie die vorhergehend verwendeten) wurden mit einer Strömung heißer Verbrennungsgase in Kontakt gebracht, was eine Aufheizgeschwindigkeit von 9°C/Minute für eine Dauer von 10 Minuten ergab.

Die unter Verwendung des Trommelrösters erzielte Röstfarbe, die gemäß dem vorhergehend beschriebenen Verfahren unter Verwendung des Neuhaus Neotec ColorTest II® Spektrophotometers gemessen wurde, ergab einen CTn-Wert von 75.

Der Acrylamidgehalt in der in dem Trommelröster gerösteten Probe betrug 369 ppm.

Das Rösttemperaturprofil, das in dem Trommelröster erhalten wird, ist in Figur 3 veranschaulicht (Trommel - gestrichelte Kurve).

Als Schlussfolgerung zeigen diese Ergebnisse, dass das Rösttemperaturprofil der vorliegenden Erfindung überraschenderweise einen niedrigeren Acrylamidgehalt mit einer kürzeren Röstzeit ermöglicht. Tatsächlich wird typischerweise davon ausgegangen, dass eine längere Röstzeit die Verringerung des Acrylamidgehalts ermöglichen würde, aber das aus einer Stufe bestehende Rösten in einem Trommelröster lieferte, obgleich es über einen längeren Zeitraum durchgeführt wurde, Acrylamidgehalte, die im Vergleich zu den Gehalten, die mit dem Verfahren der vorliegenden Erfindung erhalten werden, deutlich höher sind.

Beispiel 2

Dieses Beispiel veranschaulicht das Rösttemperaturprofil, das durch das Verfahren der vorliegenden Erfindung erhalten wird, im Vergleich zum Temperaturprofil, das in einem Trommelröster erhalten wird. Es veranschaulicht auch, dass der Gehalt der unerwünschten Verbindung, d. h. Acrylamid, wenn das Verfahren der vorliegenden Erfindung angewandt wird, um Kaffeebohnen zu rösten, im Vergleich zum Rösten in einem Trommelröster erheblich niedriger ist, obgleich die Röstzeit kürzer war.

Das Verfahren gemäß der vorliegenden Erfindung wurde angewandt, um Kaffeebohnen in der gleichen Röstkammer zu rösten. In Schritt a) wurde eine Charge von 400 kg trocken aufbereiteten Arabica-Kaffeebohnen in einem Neotec™ RFB-Röster mit einer Strömung heißer Verbrennungsgase in Kontakt gebracht und aufgewirbelt, was eine Aufheizgeschwindigkeit von 32,5°C/Minute für eine Dauer von 2 Minuten ergab. Im Schritt b) des vorliegenden Verfahrens wurde Luft mit Umgebungstemperatur in die Strömung heißer Verbrennungsgase eingeführt, was eine Aufheizgeschwindigkeit von 6,9°C/Minute für eine Dauer von 5,5 Minuten ergab.

Die unter Verwendung des Verfahrens gemäß der vorliegenden Erfindung erzielte Röstfarbe, die gemäß dem vorhergehend beschriebenen Verfahren unter Verwendung des Neuhaus Neotec ColorTest II® Spektrophotometers gemessen wurde, ergab einen CTn-Wert von 141.

Der Acrylamidgehalt in der durch das Verfahren gemäß der vorliegenden Erfindung gerösteten Probe, der gemäß dem vorhergehend beschriebenen Verfahren gemessen wurde, betrug 377 ppm.

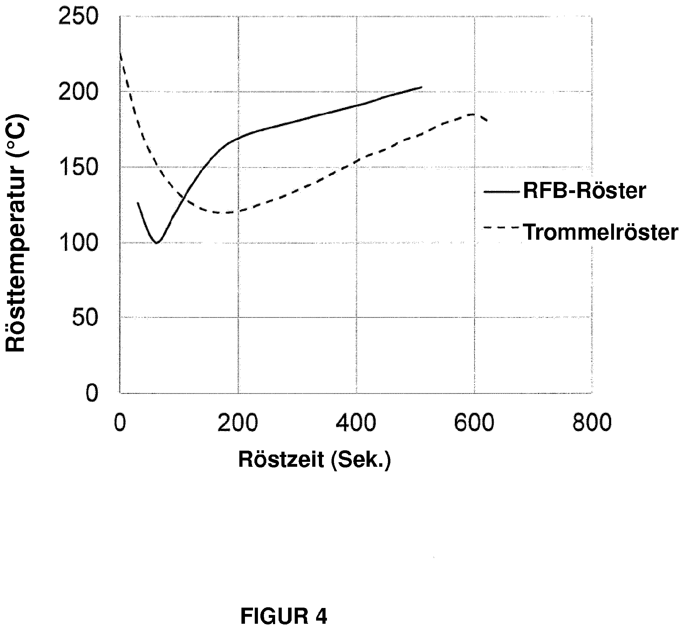

Das Rösttemperaturprofil gemäß der vorliegenden Erfindung ist in Figur 4 veranschaulicht (RFB - normale Kurve).

Zu Vergleichszwecken wurde ein aus einem Schritt bestehendes Röstverfahren in einem Trommelröster eingesetzt. Eine Charge von 262 kg trocken aufbereiteten Arabica-Kaffeebohnen (gleiche Spezifikationen wie vorhergehend) wurde mit einer Strömung heißer Verbrennungsgase in Kontakt gebracht, was eine Aufheizgeschwindigkeit von 7,9°C/Minute für eine Dauer von 7,5 Minuten ergab.

Die unter Verwendung des Trommelrösters erzielte Röstfarbe, die gemäß dem vorhergehend beschriebenen Verfahren unter Verwendung des Neuhaus Neotec ColorTest II® Spektrophotometers gemessen wurde, ergab einen CTn-Wert von 154.

Der Acrylamidgehalt in der in dem Trommelröster gerösteten Probe betrug 518 ppm.

Das Rösttemperaturprofil, das in dem Trommelröster erhalten wird, ist in Figur 4 veranschaulicht (Trommel - gestrichelte Kurve).

Beispiel 3

Dieses Beispiel veranschaulicht das Rösttemperaturprofil, das durch das Verfahren der vorliegenden Erfindung erhalten wird, im Vergleich zum Temperaturprofil, das in einem Schaufelradröster erhalten wird.

Das Verfahren gemäß der vorliegenden Erfindung wurde angewandt, um Kaffeebohnen in einer einzigen Röstkammer zu rösten. In Schritt a) wurde eine Charge von 330 kg einer Mischung aus Arabica- und Robusta-Kaffeebohnen in einem Neotec™ RFB-Röster mit einer Strömung heißer Verbrennungsgase in Kontakt gebracht und aufgewirbelt, was eine Aufheizgeschwindigkeit von 35,6°C/Minute für eine Dauer von 2,3 Minuten ergab. Im Schritt b) wurde Luft mit Umgebungstemperatur in die Strömung heißer Verbrennungsgase eingeführt, was eine Aufheizgeschwindigkeit von 6,3°C/Minute für eine Dauer von 3,5 Minuten ergab.

Die unter Verwendung des Verfahrens gemäß der vorliegenden Erfindung erzielte Röstfarbe, die gemäß dem vorhergehend beschriebenen Verfahren unter Verwendung des Neuhaus Neotec ColorTest II® Spektrophotometers gemessen wurde, ergab einen CTn-Wert von 95.

Der Acrylamidgehalt in der durch das Verfahren gemäß der vorliegenden Erfindung gerösteten Probe, der gemäß dem vorhergehend beschriebenen Verfahren gemessen wurde, betrug 337 ppm.

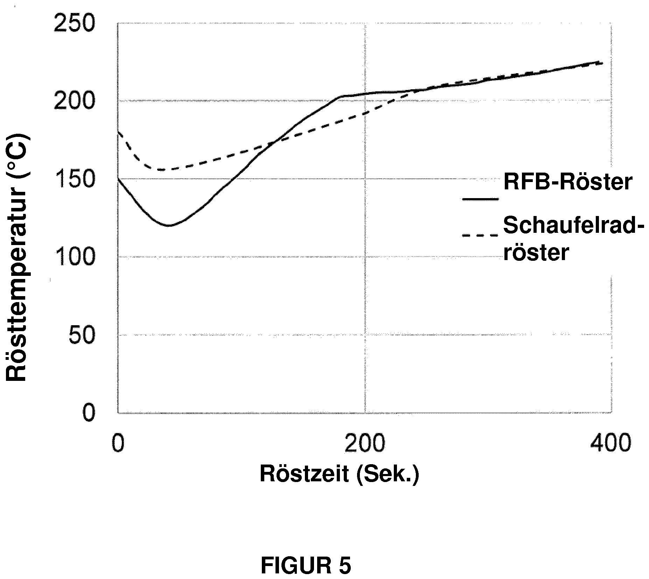

Das Rösttemperaturprofil gemäß der vorliegenden Erfindung ist in Figur 5 veranschaulicht (RFB - normale Kurve).

Zu Vergleichszwecken wurde ein aus zwei Schritten bestehendes Röstverfahren in einem Schaufelradröster eingesetzt. Eine Charge von 330 kg einer Mischung aus Arabica- und Robusta-Kaffeebohnen (gleiche Spezifikationen wie vorhergehend) wurde mit einer Strömung heißer Verbrennungsgase in Kontakt gebracht, was eine Aufheizgeschwindigkeit von 14,5°C/Minute für eine Dauer von 3,7 Minuten ergab, auf die eine Stufe mit 6,4°C/Minute für eine Dauer von 2,2 Minuten folgte.

Die unter Verwendung des Schaufelradrösters erzielte Röstfarbe, die gemäß dem vorhergehend beschriebenen Verfahren unter Verwendung des Neuhaus Neotec ColorTest II® Spektrophotometers gemessen wurde, ergab einen CTn-Wert von 95.

Der Acrylamidgehalt in der in dem Schaufelradröster gerösteten Probe betrug 446 ppm.

Das Rösttemperaturprofil, das in dem Schaufelradröster erhalten wird, ist in Figur 5 veranschaulicht (Schaufel - gestrichelte Kurve).

Aus Figur 5 ist ersichtlich, dass das Verhältnis zwischen der Aufheizgeschwindigkeit von Schritt a) und Schritt b) gemäß der vorliegenden Erfindung in dem Schaufelradröster nicht erreicht werden kann, der ein unterschiedliches Temperaturprofil ergibt. Der unter Verwendung des Temperaturprofils der vorliegenden Erfindung erhaltene Acrylamidgehalt ermöglichte eine erhebliche Senkung des Gehalts an Acrylamid.

Beispiel 4

Dieses Beispiel veranschaulicht das Rösttemperaturprofil gemäß der vorliegenden Erfindung, das die Aufheizschritte a), b) und c) umfasst.

Das Verfahren gemäß der vorliegenden Erfindung wurde angewandt, um Kaffeebohnen in der gleichen Röstkammer zu rösten. Im Schritt a) wurde eine Charge von 35 kg trocken verarbeiteten Arabica-Kaffeebohnen mit einem Neotec™-RFB-Röster (rotational flexible bed = rotierendes, bewegliches Bohnenbett) in Kontakt gebracht und mit einer Strömung heißer Verbrennungsgase aufgewirbelt, was eine Aufheizgeschwindigkeit von 21,2°C/Minute für eine Dauer von 3 Minuten ergab. Im Schritt b) wurde Luft mit Umgebungstemperatur in die Verbrennungsgasströmung eingeführt, was eine Aufheizgeschwindigkeit von 2,4°C/Minute für eine Dauer von 8,7 Minuten ergab. Im Schritt c) wird die Einführung von Umgebungsluft unterbrochen, was eine Aufheizgeschwindigkeit von 15,3°C/Minute für eine Dauer von 2,9 Minuten ergab.

Die unter Verwendung des Verfahrens gemäß der vorliegenden Erfindung erzielte Röstfarbe, die gemäß dem vorhergehend beschriebenen Verfahren unter Verwendung des Neuhaus Neotec ColorTest II® Spektrophotometers gemessen wurde, ergab einen CTn-Wert von 74.

Der Acrylamidgehalt in der durch das Verfahren gemäß der vorliegenden Erfindung gerösteten Probe, der gemäß dem vorhergehend beschriebenen Verfahren gemessen wurde, betrug 298 ppm.

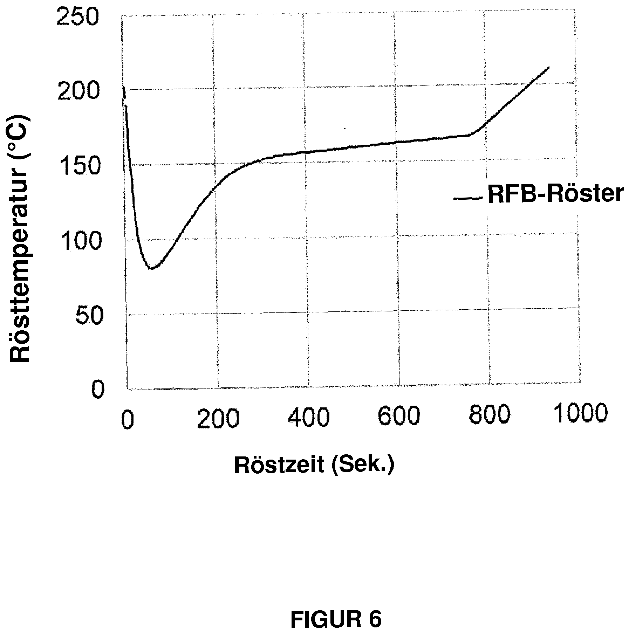

Das Rösttemperaturprofil gemäß der vorliegenden Erfindung ist in Figur 6 veranschaulicht (RFB - normale Kurve).

**Patentansprüche**

1. Verfahren zum Rösten von Kaffeebohnen durch Beaufschlagen der Kaffeebohnen mit Röstgas, **dadurch gekennzeichnet, dass** die Temperatur der Kaffeebohnen während der Röstung durch zumindest zeitweiliges Beaufschlagen der Kaffeebohnen mit Röstgas in Kombination mit Kühlgas gesteuert wird, wobei das Kühlgas Luft bei Umgebungstemperatur ist.

2. Verfahren nach Anspruch 1, bei dem die Temperatur der Kaffeebohnen gemäß einem vorgegebenen zeitlichen Verlauf (Röstprofil) gesteuert wird.

3. Verfahren nach Anspruch 1 oder 2, bei dem der mittlere Anstieg der Temperatur der Kaffeebohnen zumindest während einer ersten Röstphase 15°C bis 40°C pro Minute, vorzugsweise 20°C bis 36°C pro Minute, beträgt.

4. Verfahren nach einem der Ansprüche 1 bis 3, bei dem der mittlere Anstieg der Temperatur der Kaffeebohnen zumindest in einer zweiten Röstphase 0 bis 7°C pro Minute, vorzugsweise 1 bis 6,3°C pro Minute, weiterhin vorzugsweise 2 bis 6°C pro Minute beträgt.

5. Verfahren nach einem der Ansprüche 1 bis 4, bei dem die Röstung der Kaffeebohnen in einer Heißluft-, vorzugsweise RFB- (*rotational flexible bed* ≈ rotierendes, bewegliches Bohnenbett) Röstkammer durchgeführt wird.

6. Verfahren nach einem der Ansprüche 1 bis 5, bei dem eine Menge von mindestens 150 kg Kaffeebohnen pro Stunde, vorzugsweise von mindestens 300 kg Kaffeebohnen pro Stunde, geröstet wird.

7. Verfahren nach einem der Ansprüche 1 bis 6, bei dem die Kaffeebohnen mit Umluft geröstet werden.

8. Verfahren nach einem der Ansprüche 1 bis 7, bei dem die Röstzeit der Kaffeebohnen 1,5 bis 15 Minuten, vorzugsweise 5 bis 9, 5 Minuten, beträgt.

9. Vorrichtung mit Mitteln zur Durchführung des Verfahrens nach einem der Ansprüche 1 bis 8, die eine Röstkammer (1), eine Einrichtung zum Erhitzen von Röstgas (25), eine Einrichtung zum Einspeisen des Röstgases (26) in die Röstkammer (1), eine Einrichtung zum Bereitstellen von Kühlgas (30), die einen Lufteinlass (27) für Umgebungsluft aufweist, eine Einrichtung zum Einspeisen des Kühlgases (31) in die Röstkammer (1), und eine elektrische Steuerung (32) umfasst, wobei die elektrische Steuerung (32) so ausgebildet ist, dass die Einrichtung zum Erhitzen von Röstgas (25), die Einrichtung zum Einspeisen des Röstgases (26), die Einrichtung zum Bereitstellen von Kühlgas (30) und die Einrichtung zum Einspeisen des Kühlgases (31) so steuert, dass durch Einspeisen von Röstgas und zumindest zeitweiliges Einspeisen von Kühlgas in Kombination mit Röstgas während der Röstung in die Röstkammer (1) die Temperatur der Kaffeebohnen (13) gesteuert wird.

10. Vorrichtung nach Anspruch 9, die einen Temperatursensor (33) umfasst, der in der Röstkammer (1) angeordnet ist und die Temperatur der Kaffeebohnen (13) beim Rösten in der Röstkammer (1) ermittelt und mit der elektrischen Steuerung (32) verbunden ist.

11. Vorrichtung nach Anspruch 9 oder 10, bei der die Röstkammer (1) eine Heißluft-, vorzugsweise RFB-Röstkammer ist.

12. Vorrichtung nach einem der Ansprüche 9 bis 11, bei der das Röstgas in einem Kreislauf durch die Röstkammer (1), vom Röstgas-Auslass (5) der Röstkammer (1) vorzugsweise durch einen Zyklon (18), durch einen Brenner (14), durch ein Heißluftgebläse (16) und zum Röstgas-Einlass (2) der Röstkammer (1) geführt ist.

13. Vorrichtung nach einem der Ansprüche 9 bis 12, die eine Röstkapazität von mindestens 150 kg Kaffeebohnen pro Stunde, vorzugsweise von mindestens 300 kg Kaffeebohnen pro Stunde aufweist.

**Claims**

1. Process for roasting coffee beans by exposing the coffee beans to roasting gas, **characterized in that** the temperature of the coffee beans during roasting is controlled by at least temporarily exposing the coffee beans to roasting gas in combination with cooling gas, the cooling gas being air at ambient temperature.

2. Process according to claim 1 in which the temperature of the coffee beans is controlled according to a predetermined time profile (roasting profile).

3. Process according to claim 1 or 2, in which the mean increase in temperature of the coffee beans during at least a first roasting phase is 15°C to 40°C per minute, preferably 20°C to 36°C per minute.

4. Process according to any one of claims 1 to 3 in which the mean increase in temperature of the coffee beans at least in a second roasting phase is 0 to 7°C per minute, preferably 1 to 6.3°C per minute, further preferably 2 to 6°C per minute.

5. Process according to any one of claims 1 to 4, in which the coffee beans are roasted in a hot-air, preferably RFB (rotational flexible bed) roasting chamber.

6. Process according to any one of claims 1 to 5 which comprises roasting an amount of at least 150 kg of coffee beans per hour, preferably at least 300 kg of coffee beans per hour.

7. Process according to any of claims 1 to 6 in which the coffee beans are roasted with circulating air.

8. Process according to any of claims 1 to 7 in which the roasting time of the coffee beans ranges from 1.5 to 15 minutes, preferably from 5 to 9.5 minutes.

9. Device with means for executing the process according to any of claims 1 to 8, comprising a roasting chamber (1), means for heating roasting gas (25), means for feeding the roasting gas (26) into the roasting chamber (1), means for providing cooling gas (30) having an air inlet (27) for ambient air, means for feeding the cooling gas (31) into the roasting chamber (1), and an electrical controller (32), the electrical controller (32) being so configured, in that the device for heating roasting gas (25), the device for feeding in the roasting gas (26), the device for providing cooling gas (30) and the device for feeding in the cooling gas (31) are controlled in such a way that the temperature of the coffee beans (13) is controlled by feeding in roasting gas and at least temporary feeding in cooling gas in combination with roasting gas during roasting into the roasting chamber (1).

10. Device according to claim 9 comprising a temperature sensor (33) arranged in the roasting chamber (1) and detecting the temperature of the coffee beans (13) during roasting in the roasting chamber (1) and connected to the electric controller (32).

11. Device according to claim 9 or 10, in which the roasting chamber (1) is a hot-air, preferably RFB, roasting chamber.

12. Device according to one of claims 9 to 11, in which the roasting gas is guided in a circuit through the roasting chamber (1), from the roasting gas outlet (5) of the roasting chamber (1) preferably through a cyclone (18), through a burner (14), through a hot air blower (16) and to the roasting gas inlet (2) of the roasting chamber (1).

13. Device according to one of claims 9 to 12, which has a roasting capacity of at least 150 kg coffee beans per hour, preferably of at least 300 kg coffee beans per hour.

## Revendications

1. Procédé de torréfaction de grains de café par exposition des grains de café à un gaz de torréfaction, **caractérisé en ce que** la température des grains de café est commandée durant la torréfaction par l'exposition au moins temporaire des grains de café à un gaz de torréfaction combiné à un gaz de refroidissement, dans lequel le gaz de refroidissement est de l'air à la température ambiante.

2. Procédé selon la revendication 1, dans lequel la température des grains de café est commandée selon une évolution temporelle prédéfinie (profil de torréfaction).

3. Procédé selon la revendication 1 ou 2, dans lequel la hausse moyenne de la température des grains de café varie au moins durant une première phase de torréfaction de 15 °C à 40 °C par minute, de préférence de 20 °C à 36 °C par minute.

4. Procédé selon l'une des revendications 1 à 3, dans lequel la hausse moyenne de la température des grains de café varie au moins dans une seconde phase de torréfaction de 0 à 7 °C par minute, de préférence de 1 à 6,3 °C par minute, encore mieux de 2 à 6 °C par minute.

5. Procédé selon l'une des revendications 1 à 4, dans lequel la torréfaction des grains de café est exécutée dans une chambre de torréfaction à air chaud, de préférence de type RFB (*rotational flexible bed* ≈ à lit flexible rotatif).

6. Procédé selon l'une des revendications 1 à 5, dans lequel une quantité d'au moins 150 kg de grains de café par heure, de préférence d'au moins 300 kg de grains de café par heure est torréfiée.

7. Procédé selon l'une des revendications 1 à 6, dans lequel les grains de café sont torréfiés par convection d'air chaud.

8. Procédé selon l'une des revendications 1 à 7, dans lequel la durée de torréfaction des grains de café varie de 1,5 à 15 minutes, de préférence de 5 à 9,5 minutes.

9. Dispositif doté de moyens servant à mettre en œuvre le procédé selon l'une des revendications 1 à 8, qui comprend une chambre de torréfaction (1), un appareil pour chauffer le gaz de torréfaction (25), un appareil pour injecter le gaz de torréfaction (26) dans la chambre de torréfaction (1), un appareil pour fournir le gaz de refroidissement (30), lequel présente une prise d'air (27) assurant l'admission d'air ambiant, un appareil pour injecter le gaz de refroidissement (31) dans la chambre de torréfaction (1) et une commande électrique (32), dans lequel la commande électrique (32) est conçue de manière à piloter l'appareil pour chauffer le gaz de torréfaction (25), l'appareil pour injecter le gaz de torréfaction (26), l'appareil pour fournir le gaz de refroidissement (30) et l'appareil pour injecter le gaz de refroidissement (31), de sorte que la température des grains de café (13) est commandée par l'injection de gaz de torréfaction et par l'injection au moins temporaire de gaz de refroidissement en combinaison avec du gaz de torréfaction durant la torréfaction dans la chambre de torréfaction (1).

**10.** Dispositif selon la revendication 9, qui comprend un capteur de température (33), lequel est disposé dans la chambre de torréfaction (1), évalue la température des grains de café (13) lors de la torréfaction dans la chambre de torréfaction (1) et est relié à la commande électrique (32).

**11.** Dispositif selon la revendication 9 ou 10, dans lequel la chambre de torréfaction (1) est un torréfacteur à air chaud, de préférence de type RFB.

**12.** Dispositif selon l'une des revendications 9 à 11, dans lequel le gaz de torréfaction est acheminé dans un circuit traversant la chambre de torréfaction (1) depuis la sortie de gaz de torréfaction (5) de la chambre de torréfaction (1) de préférence à travers un cyclone (18), à travers un brûleur (14), à travers un ventilateur à air chaud (16) et jusqu'à l'entrée de gaz de torréfaction (2) de la chambre de torréfaction (1).

**13.** Dispositif selon l'une des revendications 9 à 12, qui présente une capacité de torréfaction d'au moins 150 kg de grains de café par heure, de préférence d'au moins 300 kg de grains de café par heure.

**FIGUR 1**

RÖSTERABGAS

ROHKAFFEE

3  8  4

14

BRENNER

D 1

F 1

18

19  S 1

20

25

10  Z 1

11

RÖSTKAMMER

33  6

13

2  K·Y

5

9

UMLUFTBETRIEB

BYPASS

RÖSTKAFFEE

12

22  23  24

21

HEISSLUFT-
GEBLÄSE

15  KLAPPE A  16  17

29

26

32

KÜHLLUFT  R 1

27  28

30

31

EP 3 178 330 B1

## Figur 2

FIGUR 3

FIGUR 4

FIGUR 5

**FIGUR 6**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5681607 A
- US 20140314923 A1
- DE 4314874 A1